# EUROPÄISCHE PATENTSCHRIFT

(11) **EP 3 622 200 B1**
(45) Veröffentlichungstag und Bekanntmachung des Hinweises auf die Patenterteilung: **24.02.2021**
(21) Anmeldenummer: 19708785.1
(22) Anmeldetag: 15.02.2019
(51) Int. Cl.: F16H 19/08, F16H 19/04, F16H 1/28, F16H 37/04, F16H 3/72

(54) **GETRIEBE**
TRANSMISSION
TRANSMISSION

(30) Priorität: 02.03.2018 DE 102018104758
(43) Veröffentlichungstag der Anmeldung: 18.03.2020
(73) Patentinhaber: Ledwon, Anton, 53842 Troisdorf (DE); Lewtschenko, Waldemar, 53773 Hennef (DE)
(72) Erfinder: Ledwon, Anton, 53842 Troisdorf (DE); Lewtschenko, Waldemar, 53773 Hennef (DE)
(74) Vertreter: Wagner Albiger & Partner Patentanwälte mbB
(86) Internationale Anmeldenummer: PCT/EP2019/053781
(87) Internationale Veröffentlichungsnummer: WO 2019/166237

(56) Entgegenhaltungen:
- US-A- 2 764 033
- Gumpoltsberger Gerhard: "Systematsiche Synthese und Bewertung von mehrg?ngigen Plantengetrieben" In: "Systematsiche Synthese und Bewertung von mehrg?ngigen Plantengetrieben", 7. August 2007 (2007-08-07), Fakult?t f?r Maschinenbau der Technischen Universit?t Chemnitz, XP055390879, Seite 38; Abbildung 2.15 a)
- Florian Mulzer: "Systematik hoch übersetzender koaxialer Getriebe", , 26. Mai 2010 (2010-05-26), XP055598364, Gefunden im Internet: URL:https://d-nb.info/1003233759/34 [gefunden am 2019-06-21]

## Beschreibung

Die Erfindung betrifft ein Getriebe mit einem Getriebeeingang und mit einem Getriebeausgang, mit einem zwischen Getriebeeingang und Getriebeausgang geschalteten Hauptrad, das um eine Drehachse drehbar gelagert ist und dem ein Radlager zugeordnet ist, das senkrecht zur Drehachse bewegbar ist.

Ein derartiges Getriebe ist beispielsweise in Form eines Planetenradgetriebes bekannt, wobei in diesem Fall das Hauptrad ein Planetenrad des Planetenradgetriebes darstellt. Das Planetenrad kämmt dabei mit einem Sonnenrad und einem dazu koaxial angeordneten Hohlrad. Das Planetenrad beziehungsweise eine Mehrzahl von zwischen Sonnenrad und Hohlrad angeordneten Planetenrädern sind in einem Planetenradträger drehbar gelagert. Der Planetenradträger lässt sich wie Hohlrad und Sonnenrad um eine Zentralachse drehen. Parallel dazu erstrecken sich die Drehachsen der einzelnen Planetenräder. Eine Drehung des Planetenradträgers um die Zentralachse bewirkt, dass die Radlager der Planentenräder in Umfangsrichtung, also senkrecht zur Zentralachse bzw. zu der Drehachse der einzelnen Planetenräder, bewegt werden. Sind beispielsweise der Getriebeausgang mit dem Sonnenrad und der Getriebeeingang mit dem Planetenradträger verbunden, so lässt sich bei fixierten Hohlrad und bei einer Einleitung einer Drehung über den Getriebeeingang eine Drehung des Planetenradträgers in gleicher Drehrichtung und mit anderer Drehzahl erzeugen. Auch ist bekannt, das Hohlrad mit dem Getriebeeingang oder dem Getriebeausgang zu koppeln und das Sonnenrad bzw. den Planetenradträger zu fixieren, um eine andere Übersetzung und gegebenenfalls eine Drehrichtungsumkehr zu erhalten. Zudem ist bekannt, ein Planetengetriebe als Getriebe mit einem ersten Getriebeeingang, einem zweiten Getriebeeingang und einem Getriebeausgang auszubilden.

Aus der Veröffentlichung "Systematik hoch übersetzender koaxialer Getriebe" von Florian Mulzer (Dissertation an der Fakultät für Maschinenwesen der Technischen Universität München, siehe Bild 2.5 I) ist ein Planetengetriebe mit Sonnenrad, Hohlrad sowie und Planetenradträger bekannt, wobei Sonnenrad und Planentenradträger drehfest miteinander verbunden sind. Die Gesamtdrehung eines Planetenrades (d.h. Rotation um die eigene Drehachse und Rotation um die Achse des Sonnenrads) wird dabei über eine Kardanwelle bzw. Gelenkwelle auf eine koaxial zum Sonnenrad angeordnete Welle übertragen. Aus der Veröffentlichung "Systematische Synthese und Bewertung von mehrgängigen Planetengetrieben" von Gerhard Gumpoltsberger (Dissertation an der Fakultät für Maschinenbau an der Technischen Universität Chemnitz, Institut für Maschinenelemente, siehe Bild 2.15 a) ist ein Planentengetriebe mit Sonnenrad, Hohlrad, Planentenradträger und Planentenrädern bekannt, wobei in radialer Richtung gesehen zwischen dem Sonnenrad und dem Hohlrad zwei miteinander kämmende Planentenräder angeordnet sind, die jeweils am Umfang eine Außenverzahnung aufweisen.

Das Verhältnis von Drehzahl des Getriebeausgangs und Drehzahl des Getriebeeingangs hängt von den Durchmesserverhältnissen der einzelnen Räder ab, die in dem Getriebe in Eingriff stehen. Stehen besonders kleine Räder mit vergleichsweise großen Rädern im Eingriff, können große Kräfte im Getriebe entstehen. Bestimmte Übersetzungsverhältnisse können daher mit großen Kräften einhergehen.

Der Erfindung liegt daher die Aufgabe zu Grunde, ein Getriebe mit einem bestimmten Übersetzungsverhältnis bereitzustellen, in dem das Niveau der auftretenden Kräfte möglich gering gehalten wird.

Die der Erfindung zu Grunde liegende Aufgabe wird mit der Merkmalskombination gemäß Anspruch 1 gelöst.

Das Getriebe gemäß Anspruch 1 weist ein um eine Drehachse drehbares Hauptrad auf, dem ein Radlager zugeordnet ist. Das Radlager ist senkrecht zur Drehachse bewegbar. Zur Drehung des Hauptrads um seine Drehachse ist ein Radantrieb vorgesehen, der mit dem Hauptrad in einer Eingriffszone in Eingriff steht. Ein Radlagerantrieb dient zum Bewegen des Radlagers. Bei Einleitung eines ersten Drehmoments an dem ersten Getriebeeingang dreht der Radantrieb das Hauptrad um seine Drehachse. Ein zweites Drehmoment an dem zweiten Getriebeeingang treibt den Radlagerantrieb an, wodurch die Lage der Eingriffszone geändert wird. Die Bewegung der Eingriffszone und eine Umfangsbewegung des Hauptrads in der Eingriffszone kann entgegen gesetzt oder gleichgerichtet sein.

Sind die Drehmomente an den Getriebeeingängen so eingestellt, dass die Bewegung der Eingriffszone und die Umfangsbewegung des mit einer Außenverzahnung aufweisenden Hauptrads entgegengesetzt sind, dann summieren sich die Drehmomente in der Art, dass das Hauptrad in Summe schneller dreht. Die Eigenrotation des Hauptrads um seine Drehachse und die bevorzugte Rotation des Radlagers des Hauptrads führen dann zu einer insgesamt größeren Gesamtrotation des Hauptrads, welche an dem Getriebeausgang zur Verfügung steht.

Beispielsweise kann der erste Getriebeeingang zur Einleitung eines permanent wirkenden Drehmoments genutzt werden, während in den zweiten Getriebeeingang eine impulsartige Energie eingeleitet werden kann. Die impulsartige Energie führt dann zu einer Beschleunigung des Hauptrads bzw. des Getriebeausgangs, ohne dass dabei die impulsartige Energie mit einer bestimmten Drehzahl anliegen muss. Wenn das erfindungsgemäße Getriebe Teil eines elektrisch angetriebenen Fahrrads ist, kann ein E-Motor für den permanenten Antrieb sorgen (beispielsweise für eine Geschwindigkeit von 15 km/h), wobei die impulsartige Energie über die Muskelkraft des Fahrradfahrers bereitgestellt wird. Der Fahrradfahrer kann dabei auch mit einer geringen Trittfrequenz unabhängig von der Drehzahl des E-Motors treten. Bei der impulsartigen Energie kann es sich auch um eine aufgespeicherte Energie handeln, die stoßartig freigesetzt wird (zum Beispiel Entspannen einer gespannten Feder). Damit lässt sich Sonnenenergie aufspeichern und auf einem höheren mechanischen Niveau nutzen.

Gleichwohl in einer bevorzugten Ausführung sich die Drehmomente an den Getriebeeingängen ergänzen sollen, um an dem Getriebeausgang eine größere Gesamtleistung abgreifen zu können, kann es sich bei dem Drehmoment an dem zweiten Getriebeeingang auch um ein negatives Drehmoment handeln, das in elektrische Energie umgewandelt werden kann. Die Bewegung der Eingriffszone und somit das Verhältnis der Drehzahl an dem ersten Getriebeeingang zu der Drehzahl an dem Getriebeausgang lässt sich über die Höhe des (Dreh-)Widerstands des Radlagerantriebs einstellen.

Anhand der in der Zeichnung dargestellten Getriebe und einem Ausführungsbeispiel wird die Erfindung näher erläutert. Es zeigen:
- Figur 1: schematisch ein erstes Getriebe;
- Figur 2: ein zweites Getriebe schematisch im Längsschnitt;
- Figur 3: das zweite Getriebe mit kleinen Modifikationen in der Draufsicht;
- Figur 4: ein drittes Getriebe schematisch im Längsschnitt;
- Figur 5: ein viertes Getriebe schematisch im Längsschnitt;
- Figur 6: ein fünftes Getriebe schematisch im Längsschnitt;
- Figur 7: ein sechstes Getriebe schematisch im Längsschnitt;
- Figur 8: ein Ausführungsbeispiel für das erfindungsgemäße Getriebe mit zwei Getriebeeingängen; und
- Figur 9: ein weiteres Getriebe mit zwei Getriebeeingängen.

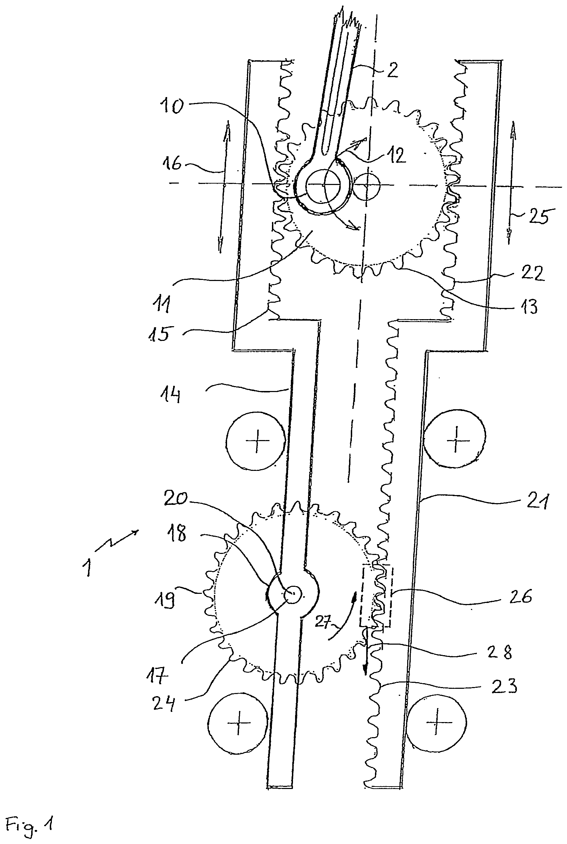

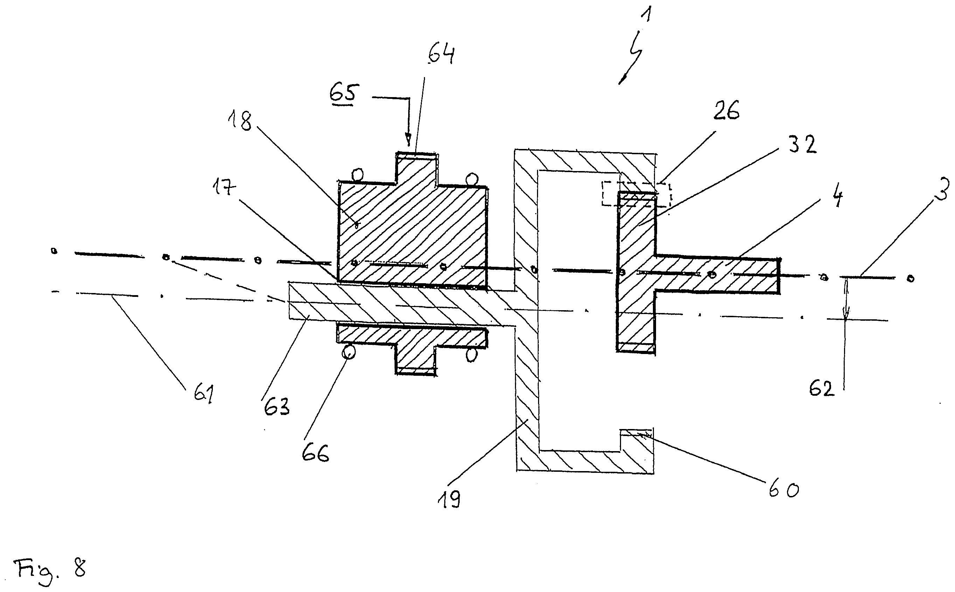

Figur 8 zeigt ein Ausführungsbeispiel der Erfindung. Die Figuren 1 bis 7 sowie 9 zeigen diverse Getriebe, die nicht unter den Wortlaut von Anspruch 1 fallen.

Figur 1 zeigt ein Getriebe, das in seiner Gesamtheit mit 1 bezeichnet ist. Das Getriebe 1 weist einen Getriebeeingang auf, der einen Kurbelzapfen 10 umfasst. Auf dem Kurbelzapfen 10 sitzt ein getriebeseitiges Ende einer hier nur teilweise dargestellten Kurbelstange 2. Die Kugelstange 2 ist Teil eines Antriebs (nicht dargestellt) für das Getriebe 1, der über den Kurbelzapfen 10 eine oszillierende Drehbewegung eines Lagerantriebsrad 11 erzeugt. Die oszillierende Drehbewegung (Hin- und Herbewegung) ist durch den halbkreisförmigen Doppelpfeil 12 dargestellt.

Das Lagerantriebsrad 11 weist eine Außenverzahnung 13 auf, die mit einem Radlagerantrieb 14 in Eingriff steht. Die Außenverzahnung 13 kämmt dabei mit einer Zahnstange 15 des Radlagerantriebs 14. Durch das Zusammenwirken von Zahnstange 15 und der Außenverzahnung 13 des Lagerantriebsrads 11 wird die oszillierende Kreisbewegung gemäß Doppelpfeil 12 in eine oszillierende, nun aber lineare Bewegung des Radlagerantriebs 14 umgeformt. Die oszillierende Linearbewegung des Radlagerantriebs 14 ist durch den Doppelpfeil 16 gekennzeichnet.

Der Radlagerantrieb 14 dient zum Bewegen eines Radlagers 17, das zwischen einem Radträger 18 und einem Hauptrad 19 vorgesehen ist. Durch den Radlagerantrieb 14 wird somit das Radlager 17 entsprechend des Doppelpfeils 16 hin und her bewegt. Das Radlager 17 legt die Lage einer Drehachse 20 des Hauptrads 19 fest.

Die Außenverzahnung 13 des Lagerantriebsrads 11 steht zudem im Eingriff mit einem Radantrieb 21. Der Radantrieb 21 weist eine erste Zahnstange 22 auf, die mit der Außenverzahnung 13 des Lagerantriebsrad 11 kämmt. Eine zweite Zahnstange 23 kämmt mit einer Außenverzahnung 24 des Hauptrads 19. Durch die oszillierende Drehbewegung des Lagerantriebsrads 11 gemäß dem halbkreisförmigen Doppelpfeil 12 führt der Radantrieb 21 eine lineare Hin- und Herbewegung gemäß dem Doppelpfeil 25 aus.

Wird durch die Kurbelstange 2 das ortsfeste Lagerantriebsrad 11 gegen den Uhrzeigersinn gedreht, wird in der Darstellung der Figur 1 der Radlagerantrieb 14 nach unten und gleichzeitig der Radantrieb 21 nach oben bewegt. In einer Eingriffszone 26 (siehe gestrichelte Rechteck) kommt es zum besagten Eingriff zwischen der zweiten Zahnstange 23 des Radantriebs 21 und der Außenverzahnung 24 des Hauptrads 19. Durch die Bewegung des Radlagerantriebs 14 nach unten wird auch die Eingriffszone 26 nach unten verschoben. Gleichzeitig wird jedoch die zweite Zahnstange 23 bzw. der Radantrieb 21 nach oben bewegt, so dass das Hauptrad 19 doppelt so schnell dreht wie das Lagerantriebsrad 11, vorausgesetzt, dass die Durchmesser der beiden Räder 11, 19 gleich groß sind. Ein Pfeil 27 symbolisiert die Drehrichtung (gegen den Uhrzeigersinn), wenn das Lagerantriebsrad 11 gegen den Uhrzeigersinn gedreht wird. Ein Pfeil 28 zeigt dabei die Bewegungsrichtung der Eingriffszone 26. Die Umfangsbewegung 27 des Hauptrads 19 in der Eingriffszone 26 ist dabei der Bewegung 28 der Eingriffszone 26 entgegen gesetzt. Während die Umfangsbewegung gemäß Pfeil 27 in der Eingriffszone im Wesentlichen nur aus einer nach oben gerichtete Komponente besteht, weist die Bewegung der Eingriffszone gemäß Pfeil 28 nach unten.

Obgleich die Durchmesser der Räder 11, 19 gleich groß sind, führt das Getriebe 1 mit dem Lagerantrieb 14 und dem Radantrieb 21 zu einer Verdoppelung der Drehzahl des Hauptrads 19 bezogen auf die Drehzahl des Lagerantriebsrads 11.

Durch das Getriebe 1 der Figur 1 lässt sich demnach eine oszillierende Kreisbewegung des Lagerantriebsrads 11 in eine doppelt so schnelle Drehung des Hauptrads 19 umwandeln. Beispielsweise kann ein elektrischer Generator vorgesehen sein, wobei die oszillierende Bewegung des Hauptrads 19, gegenüber der Bewegung des Lagerantriebsrad 11 um den Faktor 2 erhöht, in elektrische Energie umgewandelt wird. Zudem könnte die oszillierende Bewegung des Hauptrads über entsprechende Freiläufe in eine gleich gerichtete Drehung umgewandelt werden.

In den folgenden Figuren werden Bauteile oder Merkmale, zu den Bauteilen oder Merkmalen der Figur 1 ähnlich oder identisch sind, mit gleichen Bezugszeichen versehen.

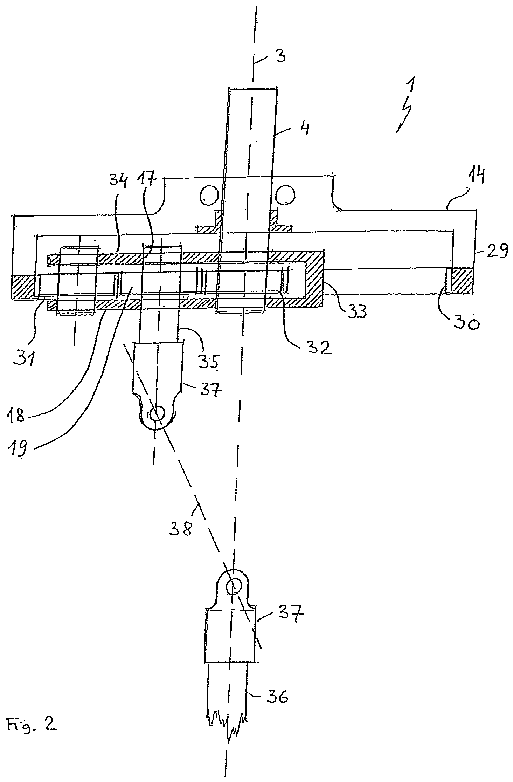

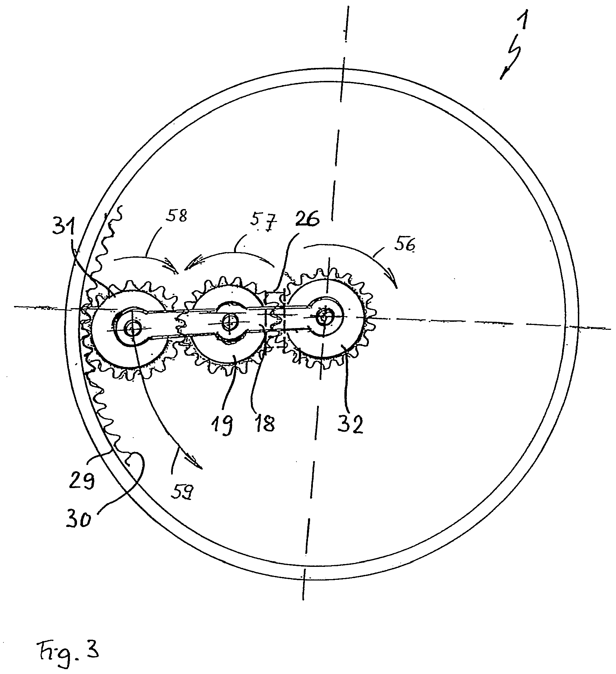

Die Figuren 2 und 3 zeigen ein zweites Getriebe. Der Radlagerantrieb 14 umfasst ein feststehendes Hohlrad 29 mit einer Innenverzahnung 30. Der Getriebeeingang umfasst hier eine Eingangswelle 4, die um eine Drehachse 3 im Hohlrad 29 drehbar gelagert ist. Mit der Innenverzahnung 30 des Hohlrads 29 kämmt ein Umlaufzahnrad 31, dass über den Radträger 18 mit dem Hauptrad 19 und einem Hauptantriebsrad 32 verbunden ist. Das Hauptantriebsrad 32 sitzt drehfest auf der Eingangswelle 4. Während der Radträger 18 bei dem in Figur 2 gezeigten Getriebe ringförmig ist und zwei durch eine U-Basis 30 verbundene U-Schenkel 34 aufweist, umfasst der Radträger 18 in der leicht modifizierten Fassung gemäß Figur 3 zwei nicht über eine U-Basis miteinander verbundene Stangen.

Wie der Figur 2 entnommen werden kann, ist das Hauptrad 19 drehfest auf einer Trägerwelle 35 angeordnet, die drehbar in dem Radträger 18 gelagert ist. Das zwischen Radträger 18 und Trägerwelle 34 vorgesehene Radlager 17 kann als Gleitlager ausgebildet sein bzw. ist in Figur 2 nicht gesondert dargestellt.

Die Drehung des Hauptrads 19 bzw. der Trägerwelle 34 wird über eine in Figur 2 nicht weiter dargestellte Kardanwelle auf eine Ausgangswelle 36 übertragen. Figur 2 zeigt Kreuzgelenksteile 37, zwischen denen sich gemäß der gestrichelten Linie 38 die Kardanwelle erstreckt.

Wird gemäß einem Pfeil 56 (siehe Figur 3) das Hauptantriebsrad 32 im Uhrzeigersinn gedreht, wird dadurch das Hauptrad 19 entgegen dem Uhrzeigersinn gemäß Pfeil 57 angetrieben. Durch die Drehung des Hauptrads 19 wiederum dreht sich das Umlaufzahnrad 31 im Uhrzeigersinn gemäß Pfeil 58 und bewirkt, dass sich aufgrund des Eingriffes mit der Innenverzahnung 30 des Hohlrads 29 der Radträger 18 um die Drehachse 3 gegen den Uhrzeigersinn (siehe Pfeil 59) dreht. Dadurch wird auch das Radlager 17 zwischen dem Radträger 18 und dem Hauptrad 19 gegen den Uhrzeigersinn bewegt. Auch wird die Eingriffszone 26 des Eingriffs zwischen dem Hauptantriebsrad 32, der den Radantrieb darstellt bzw. Teil davon ist, und dem Hauptrad 19 gegen den Uhrzeigersinn bewegt. Damit steht die Bewegung der Eingriffszone 26 der Umfangsbewegung des Hauptrads 19 in der Eingriffszone 26 entgegen. Dadurch kommt es zu einer Drehzahlerhöhung des Hauptrads 19 gegenüber der Drehzahl, mit der die Eingangswelle 4 bzw. das Hauptantriebsrad 32, obgleich die Durchmesser der Räder 19, 32 gleich groß sind. Entsprechend dreht die Ausgangswelle 36 schneller als die Eingangswelle 4 (siehe Figur 2).

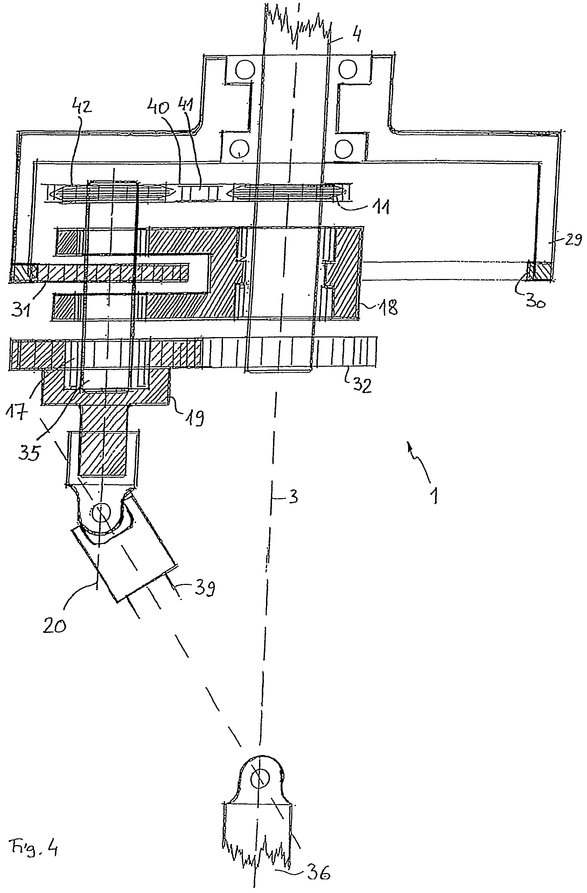

Figur 4 zeigt ein weiteres Getriebes 1. Auch hier erfolgt die Verbindung zwischen dem Hauptrad 19 und der Ausgangswelle 36 über die besagte und in Figur 4 nur angedeutete Kardanwelle 39.

Das Lagerantriebsrad 11 ist hier als erstes Kettenrad eines Kettentriebs 40 ausgebildet. Der Kettentrieb 40 umfasst des Weiteren eine Kette 41 und ein zweites Kettenrad 42, das drehfest auf der Trägerwelle 35 sitzt. Des Weiteren ist auf der Trägerwelle 35 zwischen Hauptrad 19 und dem zweiten Kettenrad 42 das Umlaufzahnrad 31 angeordnet, dass auch hier mit der Innenverzahnung 30 des feststehenden Hohlrads 29 kämmt. Der Kettentrieb befindet sich in innerhalb des Hohlrads 29.

Bei Einleitung eines antreibenden Drehmoments in die Eingangswelle 4 wird einerseits das Umlaufzahnrad 31 und andererseits über das Hauptantriebsrad 32 das Hauptrad 19 angetrieben. Aufgrund des Hauptantriebsrads 32 wird das Hauptrad 19 in Eigenrotation versetzt, d.h., dass das Hauptrad 19 um die Drehachse 20 dreht. Das Hauptrad 19 ist dabei drehbar auf der Trägerwelle 35 angeordnet. Zwischen dem Hauptrad 19 und der Trägerwelle 35 ist das Radlager 17 zu erkennen, das hier als Wälzkörperlager (Nadellager) ausgeführt ist. Durch das Lagerantriebsrad 11, den Kettentrieb 40 und das Umlaufzahnrad 31 erfolgt auch eine Drehung der Trägerwelle um die Drehachse 3 der Eingangswelle 4. Die Drehung des Hauptrads 17 um die Drehachse 20 und die Drehung der Trägerwelle 35 mit dem Hauptrad 17 um die Drehachse 3 bewirkt eine resultierende Drehung des Hauptrads 19, die gegenüber der Drehung des Hauptantriebsrad 32, welches einen gleichen Durchmesser wie das Hauptrad 19 aufweisen soll, erhöht ist. Natürlich können die Durchmesser von Hauptrad 19 und Hauptantriebsrad auch unterschiedlich groß sein. Aber auch dann stellt sich für das Hauptrad 19 eine Drehzahl ein, die größer ist als Produkt aus der Drehzahl des Hauptantriebsrads 32 und dem Durchmesserverhältnis der beiden Räder 19, 32.

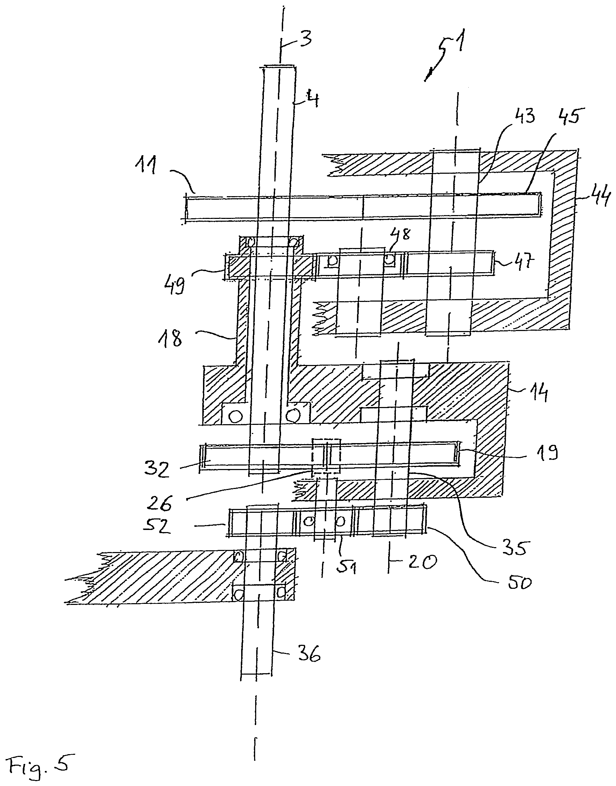

Figur 5 zeigt ein weiteres Getriebe 1. Der Radlagerantrieb 14 umfasst eine vorgelegte Welle 43, die sich parallel zur Eingangswelle 4 erstreckt und ortsfest drehbar in einem Gehäuseteil 44 des Getriebes 1 gelagert ist. Auf der Vorgelegewelle 43 ist ein Zahnrad 45 drehfest angeordnet, das mit dem Lagerantriebsrad 11 auf der Eingangswelle 4 kämmt. Die Drehung der Vorgelegewelle 43 wird über ein weiteres Zahnrad 47 und einem Zwischenrad 48 auf ein Ritzel 49 des Radträgers 18 übertragen. Der Radträger 18 ist dabei drehbar auf der Eingangswelle 4 gelagert. Aufgrund der Konstellation mit dem Zwischenrad 48 dreht der Radträger 18 in entgegengesetzter Richtung zur Eingangswelle 4.

Der Radträger 18 sorgt dafür, dass die in ihm gelagerte Trägerwelle 35 um die Drehachse 3 der Eingangswelle 4 umläuft. Das auf der Trägerwelle 35 angeordnete Hauptrad 19 wird durch das Hauptantriebsrad 32 angetrieben. Auch hier wird aufgrund der Drehung des Radträgers 18 die Eingriffszone 26 zwischen Hauptantriebsrad 32 und Hauptrad 19 in einer Kreisbahn um die Drehachse 20 bewegt. Dabei ist die Bewegung der Eingriffszone 26 der Umfangsbewegung des Hauptrads 19 in der Eingriffszone 26 entgegengesetzt. Während beispielsweise die Umfangsdrehrichtung des Hauptrads 19 in der Eingriffszone 26 in die Zeichenebene hineinläuft, wird der Radträger 18 und damit auch die Eingriffszone 26 aus der Zeichenebene hinaus bewegt.

Anstelle der Kardanwelle 39 ist hier für die Verbindung zwischen dem Hauptrad 19 bzw. der Trägerwelle 35 und der Ausgangswelle 36 ein Abtriebszahnrad 50 vorgesehen, das drehfest auf der Trägerwelle 35 sitzt. Das Abriebsrad 50 kämmt mit einem Zwischenrad 51, das wiederum mit einem Festrad 52 auf der Ausgangswelle 36 kämmt. Es sei aber betont, dass anstelle der Zahnräder 50, 51, 52 die Kardanwelle mit den Kreuzgelenksteilen 37 zum Einsatz kommen kann.

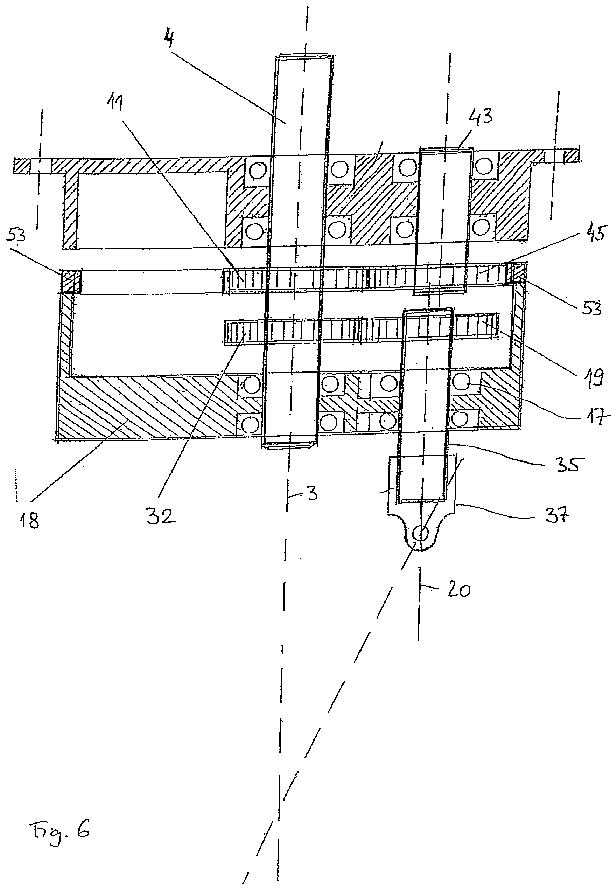

Auch das Getriebe der Figur 6 weist eine zur Eingangswelle 4 parallel geführte Vorgelegewelle 43 auf. Das Zahnrad 45, dass mit dem in etwa gleichgroßen Lagerantriebsrad 11 auf der Eingangswelle 4 kämmt, steht zudem im Eingriff mit einer Innenverzahnung 53 des umlaufenden Radträgers 18. Dabei nimmt der Radträger 18 im Wesentlichen die Form eines Hohlrades ein.

Über das Hauptantriebsrad 32, welches drehfest auf der Eingangswelle 4 angeordnet ist, erfolgt der Antrieb des Hauptrads 19, sodass dieses um die Drehachse 20 dreht. Gleichzeitig wird über das Lagerantriebsrad 11, was ebenfalls drehfest auf der Eingangswelle 4 angeordnet ist, der Radlagerantrieb 18 in Rotation versetzt. Dadurch dreht sich das Radlager 17, somit die Trägerwelle 35 und das darauf drehfest angeordnete Hauptrad 19 um die Drehachse 3 der Eingangswelle 4. Über das Kreuzgelenksteil 37, welches an der Trägerwelle 35 befestigt ist, kann das an der Trägerwelle 35 anliegende Drehmoment zur in Figur 6 nicht dargestellten Ausgangswelle übertragen werden.

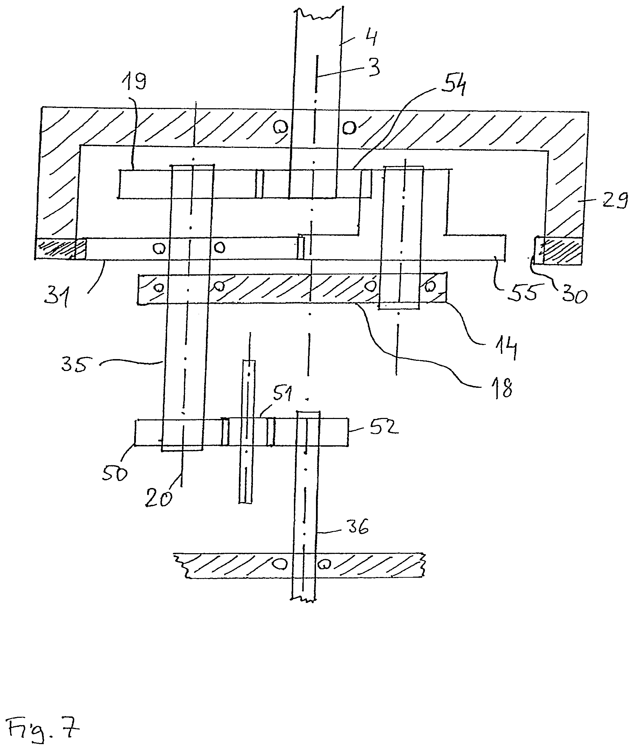

Im Getriebe der Figur 7 ist ein drehfest auf der Eingangswelle 4 angeordnetes Zahnrad 54 vorgesehen, das sowohl die Funktion des Lagerantriebsrads als auch die Funktion des Hauptantriebsrads erfüllt. Das Zahnrad 54 kämmt einerseits mit dem Hauptrad 19 auf der Trägerwelle 35 und treibt andererseits ein gestuftes Zahnrad 55 des Radlagerantriebs 14 an. Das gestufte Zahnrad 55, welches nicht gestuft sein muss, aber eine gewisse axiale Länge aufweisen muss, steht im Eingriff mit dem Umlaufzahnrad 31, das wiederum mit der Innenverzahnung 30 des feststehenden Hohlrad 29 kämmt. Dadurch rotiert der Radträger 18 um die Drehachse 3 der Eingangswelle 4. Gleichzeitig rotiert die Trägerwelle 35 um die Drehachse 20. Auch hier wieder setzt sich die resultierende Drehung des Hauptrads 19 bzw. der Trägerwelle 35 zusammen aus der Eigenrotation um die Drehachse 20 und die Rotation des Radträgers 18.

Die Verbindung zwischen Trägerwelle 35 und Ausgangswelle 36 erfolgt hier mit dem Zahnradsatz, der die Zahnräder 50, 51, 52 umfasst. Alternativ wäre eine Verbindung über die Kardanwelle möglich.

Figur 8 zeigt eine Ausführung für das erfindungsgemäße Getriebe mit der Eingangswelle 4, die sich um die Drehachse 3 dreht. Einstückig an der Welle 4 ist das Hauptantriebsrad 32 angeformt, das mit einer Innenverzahnung 60 des Hauptrads 19 kämmt. Eine Drehachse 61 des Hauptrads 19 ist zu der Drehachse 3 der Eingangswelle beanstandet, was durch eine Exzentrizität 62 gekennzeichnet ist. Ein Wellenstück 63 des Hauptrads 19 lässt sich durch einen hier nur durch eine gestrichelte Linie angedeuteten Kardanantrieb verbinden, um die Drehung des Hauptrads 19 auf die Drehachse 3 zu übertragen. Die Exzentrizität 62 kann bei dieser Ausführung minimal ausgelegt werden und gegen Null laufen. Trotzdem können die Zahnräder beliebig groß sein, um große Kräfte zu übertragen.

Die Drehung des Hauptrads 19 setzt sich zusammen aus der Eigenrotation um die Drehachse 61 und einer Drehung des Radträgers 18 um die Drehachse 3, wobei der Radträger 18 für das Wellenstück 63 das exzentrisch zur Drehachse 3 angeordnete Radlager 17 ausbildet. Der Radträger 18 weist eine umlaufende Verzahnung 64 auf, die mit einem zweiten Getriebeeingang 65 (hier nur angedeutet) zusammenwirkt. Der zweite Getriebeeingang 65 kann beispielsweise ein Zahnrad umfassen, das mit der Verzahnung 64 kämmt. Lager 66 sorgen für eine Drehlagerung des Radträgers 18.

Wenn die erste Eingangswelle mit einem ersten Getriebeeingang gekoppelt ist und beispielsweise im Uhrzeigersinn angetrieben wird, dreht sich das Hauptrad 19 ebenfalls im Uhrzeigersinn. Wenn der Radträger 18 nicht rotiert, sondern in seiner Lage fixiert ist, bleibt die Lage der Eingriffszone 26 zwischen Hauptrad 19 und Hauptantriebsrad 32 unverändert. Wird aber der Radträger 18 auch im Uhrzeigersinn angetrieben, dreht sich das Hauptrad 19 inklusive Wellenstück 63 sowohl um die Drehachse 61 als auch um die Drehachse 3. Die Drehachse 61 ist somit nicht ortsfest, sondern vollzieht eine Drehbewegung um die Drehachse 3. In Summe dreht das Hauptrad 19 um die Drehachse schneller als bei feststehendem Radträger 18.

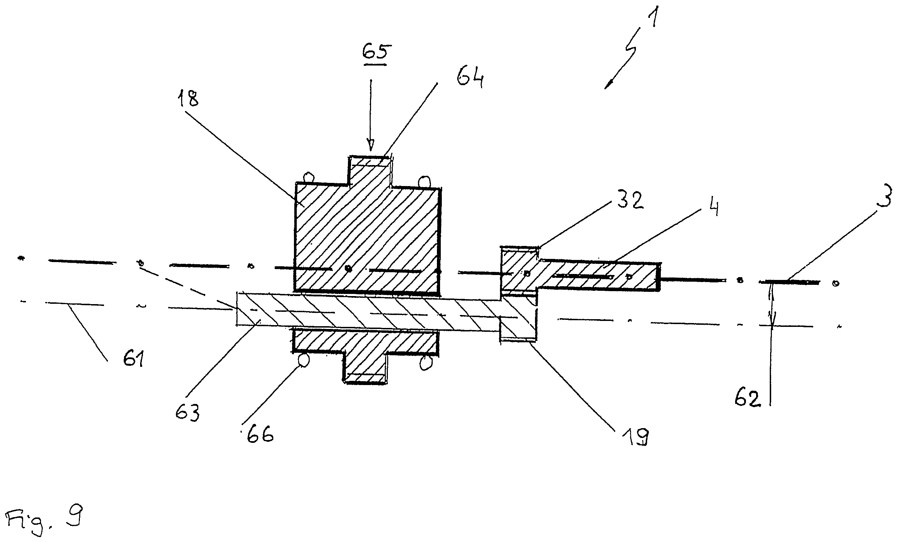

Ein weiteres Getriebe zeigt Figur 9. Das Hauptrad 19 mit dem Wellenstück 63 weist im Gegensatz zum Ausführungsbeispiel der Figur 8 eine Außenverzahnung auf, so dass eine Drehbewegung der Eingangswelle 4 im Uhrzeigersinn zu einer entgegen gesetzten Drehung des Hauptrads 19 führt, nämlich entgegen des Uhrzeigersinns. Um eine Beschleunigung des Abtriebs, hier eine Drehung um die Drehachse 3, zu erreichen, muss der Radträger 18 ebenfalls im Uhrzeigersinn angetrieben werden. In diesem Ausführungsbeispiel ist eine Bewegung der Eingriffszone 26 der Umlaufbewegung des Hauptrads 19 in der Eingriffszone 26 entgegen gesetzt.

### Bezugszeichenliste

- 1: Getriebe
- 2: Kurbelstange
- 3: Drehachse
- 4: Eingangswelle

- 10: Kurbelzapfen
- 11: Lagerantriebsrad
- 12: Doppelpfeil
- 13: Außenverzahnung
- 14: Radlagerantrieb
- 15: Zahnstange
- 16: Doppelpfeil
- 17: Radlager
- 18: Radträger
- 19: Hauptrad
- 20: Drehachse
- 21: Radantrieb
- 22: erste Zahnstange
- 23: zweite Zahnstange
- 24: Außenverzahnung
- 25: Doppelpfeil
- 26: Eingriffszone
- 27: Pfeil
- 28: Pfeil
- 29: Hohlrad
- 30: Innenverzahnung
- 31: Umlaufzahnrad
- 32: Hauptantriebsrad
- 33: U-Basis
- 34: U-Schenkel
- 35: Trägerwelle
- 36: Ausgangswelle
- 37: Kreuzgelenksteil
- 38: gestrichelte Linie
- 39: Kardanwelle
- 40: Kettentrieb
- 41: Kette
- 42: zweites Zahnrad
- 43: Vorgelegewelle
- 44: Gehäuseteil
- 45: Zahnrad
- 46: Zahnrad
- 47: Zahnrad
- 48: Zwischenrad
- 49: Ritzel
- 50: Abtriebszahnrad
- 51: Zwischenrad
- 52: Festrad
- 53: Innenverzahnung
- 54: Zahnrad
- 55: gestuftes Zahnrad
- 56: Pfeil
- 57: Pfeil
- 58: Pfeil
- 59: Pfeil
- 60: Innenverzahnung
- 61: Drehachse
- 62: Abstand
- 63: Wellenstück
- 64: Verzahnung
- 65: Zweiter Getriebeeingang
- 66: Lager

## Patentansprüche

1. Getriebe (1) mit einem ersten Getriebeeingang, der mit einer um eine Drehachse (3) drehbaren Eingangswelle (4) gekoppelt ist, mit einem zweiten Getriebeeingang und mit einem Getriebeausgang, mit einem Hauptrad (19), das um eine Drehachse (61) drehbar gelagert ist, ein Wellenstück (63) aufweist und dem ein Radlager (17) zugeordnet ist, das senkrecht zur Drehachse (61) bewegbar ist, mit einem Hauptantriebsrad (32), das zur Drehung des Hauptrads (19) um die Drehachse (61) dient und mit dem das Hauptrad (19) in Eingriff steht, und mit einem Radträger (18), der zum Bewegen des Radlagers (17) dient und eine umlaufende Verzahnung aufweist, die mit dem zweiten Getriebeausgang (65) zusammenwirkt, wobei der Radträger (18) für das Wellenstück (63) das exzentrisch zu der Drehachse (3) des Hauptantriebsrad (32) angeordnete Radlager (17) ausbildet, wobei bei Einleitung eines ersten Drehmoments an dem ersten Getriebeeingang das Hauptantriebsrad (32) das Hauptrad (19) um die Drehachse (61) dreht, wobei ein zweites Drehmoment an dem zweiten Getriebeeingang den Radträger (18) antreibt, wobei die Drehachse (61) des Hauptrads (19) zu einer Drehachse (3) des Hauptantriebsrads (32) um eine Exzentrizität (62) beabstandet ist, wobei das Hauptrad (19) eine Innenverzahnung aufweist, mit der das Hauptantriebsrad (32) kämmt, wobei das Wellenstück (63) mit einem Kardanantrieb verbindbar ist, um eine Drehung des Hauptrads (19), die sich aus einer Eigenrotation um die Drehachse (61) und einer Drehung des Radträgers (18) um die Drehachse (3) zusammensetzt, auf die Drehachse (3) zu übertragen.

## Claims

1. Transmission (1) with a first transmission input, which is coupled to an input shaft (4) rotatable about an axis of rotation (3), with a second transmission input and with a transmission output, with a main gear (19), which is mounted rotatably about an axis of rotation (61), has a shaft piece (63) and to which a wheel bearing (17) is assigned, which can be moved perpendicular to the axis of rotation (61), with a main drive gear (32), which is used for the rotation of the main gear (19) about the axis of rotation (61) and with which the main gear (19) is in engagement, and with a hub carrier (18), which is used for moving the wheel bearing (17) and has a circumferential toothing, which cooperates with the second transmission output (65), wherein the hub carrier (18) for the shaft piece (63) forms the wheel bearing (17) arranged eccentrically to the axis of rotation (3) of the main drive gear (32), wherein with the introduction of a first torque to the first transmission input the main drive gear (32) rotates the main gear (19) about the axis of rotation (61), wherein a second torque on the second transmission input drives the hub carrier (18), wherein the axis of rotation (61) of the main gear (19) is spaced apart from an axis of rotation (3) of the main drive gear (32) about an eccentricity (62), wherein the main gear (19) has an internal toothing with which the main drive gear (32) meshes, wherein the shaft piece (63) can be connected to a Cardan drive in order to transmit a rotation of the main gear (19), which is composed of inherent rotation about the axis of rotation (61) and a rotation of the hub carrier (18) about the axis of rotation (3), to the axis of rotation (3).

## Revendications

1. Transmission (1) avec une première entrée de transmission, qui est couplée à un arbre d'entrée (4) pouvant tourner autour d'un axe de rotation (3), avec une seconde entrée de transmission et avec une sortie de transmission, avec une roue principale (19), qui est disposée de manière rotative autour d'un axe de rotation (61), présente une partie d'arbre (63) et à laquelle un palier de roue (17) est associé, qui peut être déplacé perpendiculairement à l'axe de rotation (61), avec une roue motrice principale (32), qui sert à faire tourner la roue principale (19) autour de l'axe de rotation (61) et avec laquelle la roue principale (19) est en prise, et avec un support de roue (18) qui sert à déplacer le palier de roue (17) et qui présente une denture périphérique qui coopère avec la seconde sortie de transmission (65), dans laquelle le support de roue (18) pour la partie d'arbre (63) forme le palier de roue (17) disposé de manière excentrée par rapport à l'axe de rotation (3) de la roue motrice principale (32), dans laquelle, lors du déclenchement d'un premier couple sur la première entrée de transmission, la roue motrice principale (32) fait tourner la roue principale (19) autour de l'axe de rotation (61), dans laquelle un second couple sur la seconde entrée de transmission entraîne le support de roue (18), dans laquelle l'axe de rotation (61) de la roue principale (19) est espacé d'un axe de rotation (3) de la roue motrice principale (32) par une excentricité (62), dans laquelle la roue principale (19) présente une denture interne, avec laquelle la roue motrice principale (32) s'engrène, dans laquelle la partie d'arbre (63) peut être connectée à un entraînement à cardan pour transmettre à l'axe de rotation (3) une rotation de la roue principale (19) qui se compose d'une rotation propre autour de l'axe de rotation (61) et d'une rotation du support de roue (18) autour de l'axe de rotation (3).
